(19) Europäisches Patentamt
European Patent Office
Office européen des brevets

(11) EP 0 973 809 B1

(12) FASCICULE DE BREVET EUROPEEN

(45) Date de publication et mention de la délivrance du brevet:
**28.04.2004 Bulletin 2004/18**

(21) Numéro de dépôt: **99902478.9**

(22) Date de dépôt: **29.01.1999**

(51) Int Cl.[7]: **C08F 8/44**, C08G 81/00, C08G 85/00, C08J 5/22

(86) Numéro de dépôt international:
**PCT/CA1999/000078**

(87) Numéro de publication internationale:
**WO 1999/038897 (05.08.1999 Gazette 1999/31)**

# (54) POLYMERES SULFONES RETICULES ET LEUR PROCEDE DE PREPARATION

VERNETZTE SULFONIERTE POLYMERE UND VERFAHREN ZUR HERSTELLUNG DAVON

CROSS-LINKED SULPHONATED POLYMERS AND METHOD FOR PREPARING SAME

(84) Etats contractants désignés:
**DE FR GB IT**

(30) Priorité: **30.01.1998 CA 2228467**
**28.04.1998 CA 2236197**

(43) Date de publication de la demande:
**26.01.2000 Bulletin 2000/04**

(60) Demande divisionnaire:
**03024852.0 / 1 400 539**

(73) Titulaire: **HYDRO-QUEBEC**
**Montréal Québec H2Z 1A4 (CA)**

(72) Inventeurs:
- **MICHOT, Christophe**
  **F-38000 Grenoble (FR)**
- **ARMAND, Michel**
  **Montréal, Québec H3T 1N2 (CA)**

(74) Mandataire: **Guerre, Dominique et al**
**Cabinet Germain et Maureau,**
**12, rue Boileau,**
**BP 6153**
**69466 Lyon Cedex 06 (FR)**

(56) Documents cités:
**EP-A- 0 064 838**
**EP-A- 0 275 991**
**WO-A-92/17423**
**WO-A-95/15351**
**WO-A-96/38754**
**WO-A-97/09373**
**FR-A- 2 749 311**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### DOMAINE DE L'INVENTION

La présente invention concerne les résines échangeuses d'ions de type cationique, en particulier sous forme membranes, préférablement partiellement ou totalement fluorées, leur applications, en particulier dans les applications électrochimiques comme les piles à combustibles, les procédés chlore-soude, l'électrodialyse, la production d'ozone, les capteurs, de même que toute autre application liée à la dissociation des centres anioniques fixés sur la membrane, tels que la catalyse hétérogène en chimie organique.

### ART ANTÉRIEUR

À cause de leur inertie chimique, les membranes échangeuses d'ions partiellement ou totalement fluorées sont habituellement choisies dans des procédés chlore-soude ou des piles à combustible consommant de l'hydrogène ou du méthanol. De telles membranes sont disponibles commercialement sous des appellations telles que Nafion™, Flemion™, Dow™. D'autres membranes similaires sont proposées par Ballard Inc. dans la demande WO 97/25369, qui décrit des copolymères de tétrafluoroéthylène et de perfluorovinyléthers ou trifluorovinylstyrène. Les monomères actifs à partir desquels ces copolymères sont obtenus portent des fonctions chimiques qui sont des précurseurs de groupements ioniques de type sulfonate ou carboxylate. Des exemples de ces précurseurs sont:

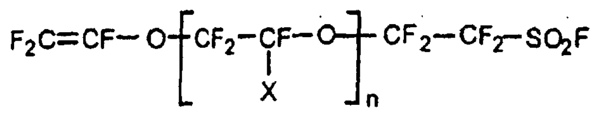

;

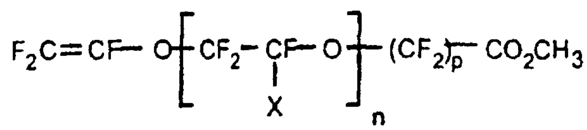

ou

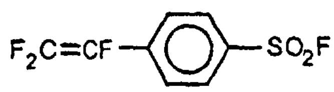

,

dans lesquels

- X est F, Cl or $CF_3$;
- n est 0 à 10 inclusivement; et
- p est 1 ou 2;

Les polymères aromatiques de type polyimide ou polyéther sulfone sulfoné ont aussi été envisagés, par exemple

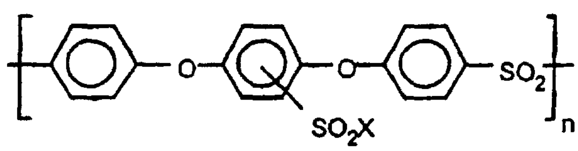

ou

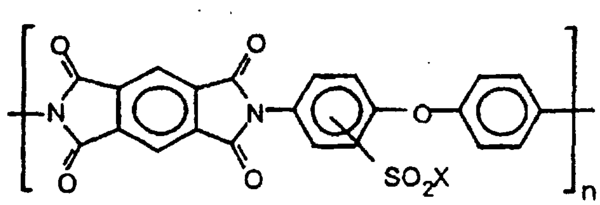

Une fois obtenu, le copolymère contenant les précurseurs précités est moulé, par exemple sous forme de feuilles, puis converti sous forme ionique par hydrolyse pour donner des espèces de type sulfonate ou carboxylate. Le cation associé aux anions sulfonate et carboxylate inclut le proton, le cation d'un métal alcalin ($Li^+$, $Na^+$, $K^+$); le cation d'un métal alcalino-terreux ($Mg^{2+}$, $Ca^{2+}$, $Ba^{2+}$); le cation d'un métal de transition ($Zn^{2+}$, $Cu^{2+}$); $Al^{3+}$; $Fe^{3+}$; le cation d'une terre rare ($Sc^{3+}$, $Y^{3+}$, $La^{3+}$); un cation organique du type "onium", tels que oxonium, ammonium, pyridinium, guanidinium, amidinium, sulfonium, phosphonium, ces cations organiques étant optionnellement substitués par un ou plusieurs radicaux organiques; un cation organométallique tel que les métallocénium, arène-métallocénium, alkylsilyle, alkylgermanyle ou alkylétain.

De telles membranes comportent cependant plusieurs désavantages importants.

A) Bien que les copolymères formant la membrane soient insolubles dans leur forme ionique, la membrane n'a pas une bonne stabilité dimensionnelle et gonfle de façon significative dans l'eau ou les solvants polaires. Ces copolymères forment des micelles inversées uniquement lorsque chauffés à haute température dans un mélange spécifique eau-alcool, qui, après évaporation, permet de produire un film. Toutefois, ce film régénéré sous forme solide n'a pas de bonnes propriétés mécaniques.

B) Le tétrafluoroéthylène (TFE) est un produit dont la manipulation est très risquée, car sa polymérisation s'effectue sous pression et peut causer des réactions non contrôlée, particulièrement en présence d'oxygène. À cause de la différence de point d'ébullition entre les 2 monomères formant le copolymère et leur différence de polarité, il est difficile d'obtenir un copolymère statistique correspondant au taux d'addition de chaque monomère.

C) Les groupements ioniques en forte concentration sur la chaîne auraient tendance à causer la solubilisation du copolymère. Afin de prévenir ce phénomène, la concentration de groupements ioniques est gardée à un faible taux en ajoutant une importante fraction molaire de monomères de TFE et/ou en augmentant la longueur des chaînes secondaires (n > 1), avec pour résultat que la concentration de groupements d'ions échangeables est de moins de 1 milliéquivalent par gramme. Conséquemment, la conductivité est relativement faible et très sensible au contenu d'eau dans la membrane, particulièrement lorsque cette dernière est acidifiée pour des applications dans une pile à combustible.

D) La pénétration du méthanol et de l'oxygène à travers la membrane est élevée, puisque la portion perfluorocarbonée du polymère permet une diffusion facile des espèces moléculaires, qui vont réagir chimiquement à l'électrode opposée et causer une perte d'efficacité faradaïque, principalement dans les piles à combustible de méthanol.

Les systèmes non fluorés tels que les polyimides sulfonés ou les polyéthers sulfones sulfonés présentent les mêmes inconvénients puisqu'il faut faire un compromis entre la densité de charge, donc la conductivité, et la solubilité ou le gonflement excessif.

## SOMMAIRE DE L'INVENTION

La présente invention concerne un polymère sulfoné comprenant une fraction ou la totalité des groupements sulfonyles réticulés, et dans lequel au moins une fraction des liaisons de réticulation porte une charge ionique. Plus spécifiquement, les liaisons de réticulation sont du type:

$$P\text{-}SO_2\text{-}Y^-(M^+)\text{-}SO_2\text{-}P'$$

$$P\text{-}SO_2(M^+)Y^-SO_2\text{-}(Q\text{-}SO_2)_rY^-(M^+)SO_2\text{-}P'$$

dans lesquelles

- P et P' sont identiques ou différents et font partie d'une chaîne polymère;
- Y consiste en N ou CR dans lequel R représente H, CN, F, $SO_2R^3$, $C_{1-20}$ alkyle substitué ou non-substitué; $C_{1-20}$ aryle substitué ou non-substitué; $C_{1-20}$ alkylène substitué ou non-substitué, dans lesquels le substituant est choisi parmi les halogènes et $SO_2R$

$R^3$ comprend F, $C_{1-20}$ alkyle substitué ou non-substitué; $C_{1-20}$ aryle substitué ou non-substitué; $C_{1-20}$ alkylène substitué ou non-substitué, dans lesquels le substituant comprend un ou plusieurs halogènes;
$M^+$ comprend un cation inorganique ou organique;
Q comprend un radical divalent $C_{1-20}$ alkyle, $C_{1-20}$ oxaalkyle, $C_{1-20}$ azaalkyle, $C_{1-20}$ thiaalkyle, $C_{1-20}$ aryle ou $C_{1-20}$ alkylaryle, chacun pouvant être optionnellement substitué par un ou plusieurs halogènes; et
r est 0 ou 1.

Dans un mode de réalisation préférentiel, $M^+$ comprend le proton, le cation d'un métal, un cation organométallique ou un cation organique, ces derniers étant optionnellement substitués par un ou plusieurs radicaux organiques R" comprenant:

- le proton, les radicaux alkyles, alkényles, oxaalkyles, oxaalkényles, azaalkyles, azaalkényles, thiaalkyles, thiaalkényles, dialkylazo, silaalkyles optionnellement hydrolysables, silaalkényles optionnellement hydrolysables, lesdits radicaux pouvant être linéaires, ramifiés ou cycliques et comprenant de 1 à 18 atomes de carbone;
- les radicaux cycliques ou hétérocycliques aliphatiques de 4 à 26 atomes de carbone comprenant optionnellement au moins une chaîne latérale comprenant un ou plusieurs hétéroatomes tels que l'azote, l'oxygène ou le soufre;
- les aryles, arylalkyles, alkylaryles et alkénylaryles de 5 à 26 atomes de carbone comprenant optionnellement un ou plusieurs hétéroatomes dans le noyau aromatique ou dans un substituant.

Le métal comprend préférentiellement un métal alcalin, un métal alcalino-terreux, une terre rare ou un métal de transition; le cation organométallique comprend un métallocénium, un arène-métallocénium, un alkylsilyle, un alkylgermanyle ou un alkylétain, et le cation organique comprend un groupement $R"O^+$ (onium), $NR"^+$ (ammonium), $R"C(NHR")_2^+$ (amidinium), $C(NHR")_3^+$ (guanidinium), $C_5R"N^+$ (pyridinium), $C_3R"N_2^+$ (imidazolium), $C_2R"N_3^+$ (triazolium), $C_3R"N_2^+$ (imidazolinium), $SR"^+$ (sulfonium), $PR"^+$ (phosphonium), $IR"^+$ (iodonium), $(C_6R")_3C^+$ (carbonium), dans lesquels R" est défini comme un radical organique tel que défini précédemment, et lorsqu'un cation organique comporte au moins deux radicaux R" différents de H, ces radicaux peuvent former ensemble un cycle aromatique ou non, englobant éventuellement le centre portant la charge cationique.

Dans un autre aspect préférentiel le radical divalent Q et le polymère sulfoné sont partiellement ou totalement fluorés.

## DESCRIPTION DÉTAILLÉE DE L'INVENTION

Il est bien connu que les polymères perfluorés ne peuvent habituellement pas être réticulés par des techniques conventionnelles utilisées pour les polymères non fluorés du fait de l'élimination facile de l'ion fluorure et de l'encombrement stérique des chaînes perfluorées. Cependant, on décrit une nouvelle technique générale pour créer des réticulations, i.e., des liens, entre les groupements sulfonyles attachés aux chaînes polymères adjacentes, incluant ceux ayant un squelette perfluoré, par exemple, ceux dérivés du monomère (I) et ses copolymères:

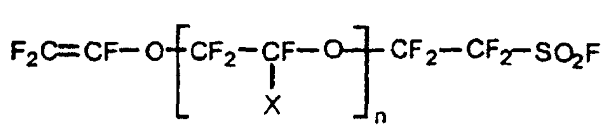

I

Avantageusement, la réticulation peut être réalisée alors que le polymère est sous forme de précurseur polymère non ionique, mais après avoir été moulé sous la forme désirée. Il en résulte donc un matériau beaucoup plus résistant mécaniquement. La présente invention concerne également le moulage du polymère réticulé sous forme de membrane ou de fibres creuse (ci-après "membranes") pour utilisation dans une pile à combustible, électrolyseur dans l'eau, un procédé chlore-soude, l'électrosynthèse, le traitement d'eau et la production d'ozone. L'utilisation des polymères réticulés comme catalyseurs de certaines réactions chimiques, grâce à la forte dissociation des groupements ioniques introduits par la technique de réticulation et l'insolubilité de la chaîne polymère, fait aussi partie de l'invention.

La création de réticulations stables se fait par l'entremise d'une réaction entre deux groupements $-SO_2L$ provenant de chaînes polymères adjacentes. La réaction est initiée par un agent de réticulation, et permet la formation de dérivés selon les formules suivantes:

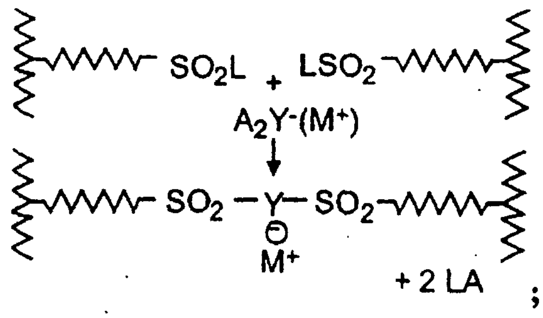


ou

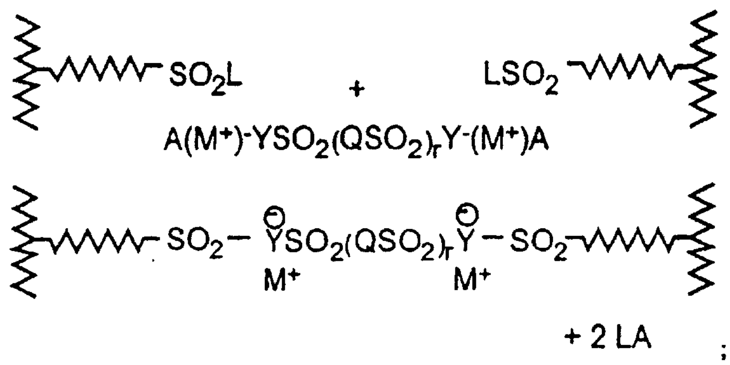


dans lesquelles r, M, Y et Q sont tels que définis précédemment;

- A comprend M, $Si(R')_3$, $Ge(R')_3$ ou $Sn(R')_3$ dans lesquels R' est $C_{1-18}$ alkyle; et
- L comprend un groupement labile tels que qu'un halogène (F, Cl, Br), un hétérocycle électrophile N-imidazolyl ou N-triazolyl, $R^2SO_3$ dans lequel $R^2$ est un radical organique tel que défini précédemment.

Le cation $M^+$ peut lui-même être solvaté ou complexé pour augmenter sa solubilité et/ou sa réactivité. Par exemple, si M est un proton, ce dernier peut être complexé à l'aide d'une base tertiaire ayant un fort caractère nucléophile, tel que la triéthylamine, la diméthylaminopyridine, le 1,4-diazabicyclo[2.2.2]octane, ou sous forme de radical tertiobutyle qui se sépare aisément en proton et $CH_2=C(CH_3)_3$. Si M est un ion métallique, ce dernier peut être solvaté par les dialkyléthers d'oligo-éthylène glycols, ou oligo-éthylènediamines méthylés.

Dans une variante, l'agent de réticulation $A_2Y^-(M^+)$ peut être formé *in situ* en présence d'une base forte, par exemple un organométallique ou un dialkyle amine métallique tel que le diisopropylamide-lithium réagissent sur les protons labiles liés au radical Y de la façon suivante:

$$HN[Si(CH_3)_3]_2 + C_4H_9Li \Rightarrow C_4H_{10} + LiN[Si(CH_3)_3]_2 ;$$

$$CH_2[Si(CH_3)_3]SO_2CF_3 + 2CH3MgClLi \Rightarrow 2CH_4 + (MgCl)_2C[Si(CH_3)_3]SO_2CF_3$$

Les agents de réticulation organométalliques préférentiels incluent les organo-lithium, organo-magnésium ou organo-aluminium, qui servent également de source de carbone lorsque Y = CR, et les amides et nitrure métalliques comme source d'azote lorsque Y = N.

Un avantage de la présente invention est que les agents de réticulation créent des espèces chargées négativement qui sont attachées aux groupements sulfonyles des polymères et utilisées comme pont entre les chaînes

polymères adjacentes. Il est bien connu que les groupements sulfonylimides et les groupements di- ou trisulfonylméthane sont des électrolytes forts dans la plupart des milieux, et en ce sens, la réaction de réticulation, en plus d'améliorer les propriétés mécaniques, n'a pas d'effet néfaste sur la conductivité. De fait, cette dernière est souvent augmentée.

Les composés suivants sont des exemples d'agents de réticulation ionogènes préférentiels, i.e., générateur de groupements ioniques, lorsque L est sur la chaîne polymère: $Li_3N$; $C_3Al_4$; $[(CH_3)_3Si]_2NLi$ (ou Na ou K); $NH_3$ + 3 DABCO; $CF_3SO_2C[(CH_3)_3Si][Li(TMEDA)]_2$; $(CH_3)_3CNH_2$ + 3 TEA; $NH_2SO_2NH_2$ + 4 TEA; $[[(CH_3)_3Si](Li)N]_2SO_2$; $[(TMEDA)(Mg)N]_2SO_2$; $CH_3Li$; $(CH_3)_3Al$; $NH_2Li$ (ou Na ou K); $[[Si(CH_3)_3](Li)NSO_2]_2CF_2$; $[Li[Si(CH_3)_3]NSO_2CF_2]_2CF_2$; $[(Li)Si(CH_3)_3NSO_2CF_2]$; et $[Li[Si(CH_3)_3]NSO_2CF_2CF_2]_2O$, dans lesquels TEA : triéthylamine ; TMEDA : N,N,N'N' tétraméthyléthylene diamine ; DABCO = 1,4-diazabicyclo-[2,2,2,]-octane.

Alternativement, la réaction de réticulation peut avoir lieu lorsque le groupement Y est déjà sur le précurseur du polymère, par exemple dans le cas d'une amide substituée. Dans ce cas, le schéma général est le suivant :

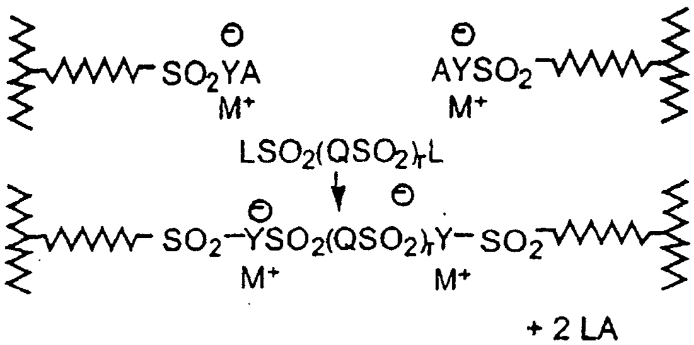

Les composés suivants sont des exemples d'agents de réticulation ionogènes préférentiels lorsque L est sur le réactif: $SO_2Cl_2$ + 3 DABCO; $SO_2$(imidazole)$_2$; $[FSO_2CF_2]_2$ + 3 TEA; $(ClSO_2CF_2)CF_2$ + 3 DABCO et $(FSO_2CF_2CF_1)_2O$ + 3 DABCO.

La réaction de réticulation peut impliquer la totalité des groupements sulfonyles, ou seulement une fraction de ceux-ci. Les réactifs de réticulation peuvent être ajoutés ou utilisés selon différentes techniques bien connues de la personne du métier. Avantageusement, le polymère est moulé sous la forme désirée avant la réticulation, par exemple sous forme de membrane ou de fibre creuse, et le matériau est immergé ou recouvert d'une solution de l'agent de réticulation dans un ou plusieurs solvants favorisant la réaction de couplage. Les solvants préférentiels sont les polyhalocarbures, le tétrahydrofuranne (THF), les glymes, les alkylamides tertiaires tels que le diméthylformamide, le N-méthylpyrrolidone, la tétraméthylurée et ses analogues cycliques, les N-alkylimidazoles, et les tétraalkylsulfamides. Le degré de réticulation désiré peut être contrôlé par différents facteurs, tels que le temps d'immersion dans le solvant contenant l'agent de réticulation, la température du solvant, la concentration d'agent de réticulation dans le solvant, ou une combinaison de ces facteurs. De préférence, ces paramètres sont ajustés de manière à produire les propriétés désirées dans un temps relativement court variant entre quelques secondes à un dizaine d'heures, et les températures sont choisies comme compatibles avec les solvants usuels, de -10°C à 250°C. À titre de comparaison, l'hydrolyse d'une membrane Nafion® prend plus de 24 h pour les épaisseurs habituelles.

Alternativement, un latex du polymère à mouler est mélangé préférablement en présence de fluides n'étant pas des solvants, tel que les hydrocarbures ordinaires ou fluorés, avec l'agent de réticulation sous forme solide et le mélange est pressé ou calandré à chaud. Cette technique s'applique avantageusement aux membranes minces, et permettent d'obtenir une haute productivité même s'il est possible que la membrane résultante soit moins homogène. Des agents de renforcement tels que des agents de remplissage, organiques ou inorganiques, comme des poudres, des fibres ou filaments tissés ou non, peuvent être ajoutés aux polymères avant la réaction de réticulation pour en renforcer la structure. De même, des agents permettant de créer un porosité ("porophores") peuvent être incorporés lorsqu'il est souhaitable d'augmenter les surfaces d'échange avec les fluides extérieurs (cas de la catalyse).

Si seulement une fraction des liens faisant le pont entre les chaînes polymères sont requis, les groupements $SO_2Y$ restants peuvent être hydrolysés de façon conventionnelle sous forme de sulfonate par hydrolyse alcaline. Alternativement, dans un mode de réalisation préférentiel, le groupement sulfonate $-SO_3^-M^+$ et les groupements non réticulés $-SO_2NSO_2R_F^-M^+$ ou $-SO_2C(R)SO_2R_F^-M^+$ dans lequel $R_F$ comprend un radical organique préférablement halogéné, particulièrement fluoré, peuvent être obtenus dans les mêmes conditions que lors des réactions de réticulation à partir d'agents ionogènes non réticulants tels que $M[(CH_3)_3SiO]$, $M[(CH_3)_3SiNSO_2R_F]$ ou $M[(CH_3)_3SiC(R)SO_2R_F]$, ou tout autre agent capable d'introduire les groupements - $NSO_2R_F$ ou $C(R)SO_2R_F$ en substitution de Y. Il peut être avantageux de traiter la membrane de façon séquentielle avec l'agent de réticulation, et ensuite avec l'agent

ionogène non réticulant. Alternativement, l'agent de réticulation et l'agent ionogène non réticulant sont mélangés et dissous dans un solvant en concentrations prédéterminées, de sorte qu'ils réagissent simultanément.

Le polymère réticulé de la présente invention peut être facilement séparé des produits secondaires de la réaction, qui sont soit volatiles, comme le $(CH_3)_3SiF$ ou $(CH_3)_3SiCl$. Alternativement, le polymère réticulé peut être lavé à l'aide d'un solvant approprié comme l'eau ou un solvant organique dans lequel il est insoluble. En outre, des techniques classiques bien connues de la personne du métier, comme par exemple l'échange d'ions ou l'électrophorèse, peuvent être utilisées pour changer le cation $M^+$ obtenu dans la réaction de réticulation et/ou venant du l'agent ionogène non réticulant par le cation désiré pour l'application finale.

Les exemples suivants sont fournies afin d'illustrer l'invention, et ne doivent en aucun temps être considérés comme en limitant la portée.

Exemple 1

15 g de polyéthersulfone sous forme de poudre sont sulfonés par 11 g d'acide chlorosulfonique dans 75 ml de 1,2-dichloroéthane. La concentration des groupements sulfoniques atteint 0.47 unités $SO_3H$ par noyau aromatique. Les groupements $SO_3H$ sont transformés en groupements $SO_2Cl$ par action d'un excès de chlorure de chlorodiméthylaminium dans le DMF. Le polymère sous forme de poudre est filtré puis lavé par de l'acétonitrile anhydre et séché sous vide. Sous atmosphère anhydre, le polymère sous forme chlorosulfonée est mis en forme de film par pressage et calandrage à 150°C. Un film de 50 microns d'épaisseur est découpé en carrés de 4 cm de côté et immergé dans une solution de 0.6 g du dérivé lithié de l'hexaméthyl-disilazane $Li[N(Si(CH_3)_3)_2]$ dans 50 ml de diméthyléthylèneurée (DMEU). Le polymère est traité dans ces conditions pendant 1 heure à 110°C sous atmosphère d'argon sec. La membrane est retirée du milieu réactionnel, rincée au THF et traitée par un excès de triméthylsilanoate de lithium (1 g) dans 50 ml de 1,2-diméthoxyéthane sous argon pendant 24 heures à 25°C. La membrane est rincée plusieurs fois à l'eau distillée et les ions métalliques sont échangés par des protons dans un extracteur de type Soxhlet par une solution d'acide chlorhydrique à la concentration azéotropique dans l'eau (i.e., 20.2% en poids). La membrane ainsi obtenue a une conductivité supérieure à $10^{-3}$ $Scm^{-1}$ à 25°C et 95% d'humidité relative. 24% des groupements sulfonyles sont engagés dans la formation de ponts imidures et la membrane ne présente pas de variations de dimensions appréciables dans les différent solvants testés, en l'occurrence eau, méthanol, éthanol, acétonitrile et carbonate de propylène.

Exemple 2

Une membrane commerciale de Nafion 117® de 175 μm d'épaisseur sous forme de sel de lithium est séchée et découpée en lanières de 4 cm x 10 cm de côté. La membrane enroulée en spirale est traitée par 2 g de diméthylaminotrifluorure de soufre $(CH_3)_2NSF_3$ dans 50 ml de THF au reflux puis rincée. Le polymère contenant maintenant les groupements sulfonés sous forme $SO_2F$ est immergé dans une solution de 60 mg de sel de sodium de l'héxaméthydisilazane dans 20 ml de diglyme anhydre et porté au reflux sous argon. Après 3 heures, la membrane est extraite du milieu réactionnel, rincée au THF puis traitée par une solution de 500 mg de triméthysilanoate de sodium dans le même solvant. Après 48 heures, la membrane est lavée à l'eau et à l'éthanol, puis transformée en sel d'hydronium par plusieurs immersions successives dans une solution d'acide nitrique 2 M dans l'eau à 60°C. Par RMN du solide haute résolution, on détermine que 32 % des groupements sulfonyles de la membrane sont sous forme de sulfonimide et 78% sous forme de sulfonate. L'augmentation du volume de la membrane en présence d'eau ou de méthanol lors de l'immersion dans ces solvants, y compris à la température d'ébullition, est inférieure à 10%.

Exemple 3

Un copolymère de tétrafluoroéthylène et de fluorure perfluorovinyloxyéthane-sulfonyle contenant 35% molaire de monomère sulfoné est calandré à chaud pour former un film de 20 microns d'épaisseur. Le composé $[Na(Si(CH_3)_3NSO_2CF_2]_2CF_2$ est préparé à partir du fluorure de l'acide hexafluoro-propane-1,3-disulfonique selon la séquence de réactions suivantes:

$$[FSO_2CF_2]_2CF_2 + 6\ NH_3 \Rightarrow 2\ NH_4F + [(NH_4)HNSO_2CF_2]_2$$

$$[(NH_4)HNSO_2CF_2]_2 + Na_2CO_3 \Rightarrow [(Na)HNSO_2CF_2]_2 + 2\ NH_3 + H_2O + CO_2$$

$$[(Na)HNSO_2CF_2]_2 + HN[(Si(CH_3)_3]_2 \Rightarrow Na[Si(CH_3)_3NSO_2CF_2]_2CF_2 + NH_3$$

10 sections carrées de 10 cm x 10 cm de cette membrane séparées par des treillis de polypropylène, sont immergées dans une cuve en verre et recouvertes d'une solution de 600 mg du dérivé disodique de la sulfamide dans 50 ml de diglyme. Le mélange réactionnel est porté à 125°C pendant 4 heures sous argon. Les membranes sont ensuite immergées dans une solution de 1 g d'hydroxyde de lithium LiOH dans 50 ml de méthanol, et l'hydrolyse des fonctions $SO_2F$ résiduelles en groupements sulfonates est poursuivie à 50°C pendant 4 heures. La membrane réticulée est lavée à l'eau déionisée, et les ions sodium sont échangés par des protons par l'acide nitrique 2M. La membrane est stockée sous air après rinçage à l'eau déionisée.

Les composés $[FSO_2CF_2]_2O$, $[FSO_2CF_2CF_2]_2O$, et $[ClSO_2CF_2CF_2]CF_2$ peuvent d'une manière similaire être substitués au fluorure de l'acide hexafluoro-propane-1,3-disulfonique comme précurseurs de l'agent pontant.

Exemple 4

La membrane de 20 µm du copolymère de tétrafluoroéthylène et de fluorure perfluorovinyloxyéthane-sulfonyle de l'exemple 3 est traitée par une solution de 800 mg du dérivé disodique de la sulfamide de l'exemple 3 et 400 mg de triméthylsilanoate de sodium dans 50 ml de diglyme. Le mélange réactionnel est porté à 125°C pendant 4 heures sous argon. La membrane est extraite, et lavée à l'eau déionisée et échangée par des protons comme pour l'exemple 3.

Exemple 5

Un copolymère de tétrafluoroéthylène et de fluorure perfluorovinyloxyéthane-sulfonyle à 35% molaire de monomère sulfoné de l'exemple 3 est réticulé d'une manière similaire par immersion dans l'agent pontant $[Na(Si(CH_3)_3NSO_2CF_2]_2CF_2$ dans les conditions de l'exemple 3. La membrane ainsi réticulée et contenant des groupements résiduels $-SO_2F$ est traitée par 2 g de se] de sodium du dérivé trifluorométhanesulfonamide de formule $Na[Si(CH_3)_3NSO_2CF_3]$ dans le diglyme à 110°C. La membrane est rincée et les ions sodium sont échangés par des protons par l'acide nitrique 2M. La totalité des fonctions sulfonées de la membrane sont sous forme de groupements sulfonamides pontant ou libres :

$$P\text{-}SO_2N(H)SO_2(CF_2)_3SO_2N(H)SO_2\text{-}P$$

$$P\text{-}SO_2N(H)SO_2(CF_3)$$

dans lesquels P représentant la chaîne polymère.

Exemple 6

Un copolymère de tétrafluoroéthylène et de fluorure perfluorovinyloxyéthane-sulfonyle similaire à celui préparé dans l'exemple 3 et contenant 35% de monomère sulfoné, est mélangé à chaud avec du chlorure de sodium en poudre de taille inférieure à 2 microns et à la fraction volumique dé 45%, puis est mis sous forme de granulés d'environ 25 microns de diamètre. 5 g de ce copolymère composite sont traités par 2 g de dérivé sodique de l'hexaméthyldisilazane dans 30 ml de diglyme à 125°C pendant 3 heures et les fonctions $SO_2F$ résiduelles sont mises à réagir avec le sel de sodium du dérivé trifluorométhanesulfonamide de formule $Na[Si(CH_3)_3NSO_2CF_3]$ dans le diglyme à 125°. Après lavage à l'eau et élimination du chlorure de sodium agissant comme porophore, i.e., créant de la porosité après son élimination, le polymère se présente sous forme de granules de grande surface spécifique permettant un accès rapide aux sites ioniques.

Exemple 7

Le composé $[CF_3SO_2C(MgCl)_2SO_2CF_2]_2CF_2$ est préparé à partir du fluorure de l'acide hexafluoro-propane-1,3-disulfonique selon la séquence de réactions suivantes:

$$[FSO_2CF_2]_2CF_2 + 2CF_3SO_2CH_3 + 4LiH \text{ ? } 2H_2 + [CF_3SO_2CH(Li)SO_2CF_2]_2CF_2$$

$$[CF_3SO_2CH(Li)SO_2CF_2]_2CF_2 + 2C_4H_9Li + 4\ MgCl_2 \text{ ?}$$

$$[CF_3SO_2C(MgCl)_2SO_2CF_2]_2CF_2 + 2C_4H_{10} + 2LiCl$$

La séquence de réactions se fait dans le même récipient (synthèse "one pot") dans l'éther dibutylique du diéthylène glycol (Ferro, USA). Une membrane de 20 microns d'épaisseur et de 10 cm x 10 cm préparée à partir du copolymère de l'exemple 3 est immergée dans une solution de 200 mg du tétrasel de chloromagnésium de la tétrasulfone dans 30 ml d'éther dibutylique du diéthylène glycol anhydre. La réaction est effectuée sous azote désoxygéné à 110°C pendant 6 heures. La membrane est extraite du milieu réactionnel, rincée au THF et l'hydrolyse des groupements $SO_2F$ résiduels est effectuée comme précédemment par le triméthylsilanoate de lithium. La membrane est lavée et échangée par des protons dans les conditions de l'exemple 3. Les composés $[FSO_2CF_2]_2O$, $[FSO_2CF_2CF_2]_2O$, et $[ClSO_2CF_2CF_2]CF_2$ peuvent d'une manière similaire être substitués au fluorure de l'acide hexafluoro-propane-1,3-disulfonique comme précurseurs de l'agent pontant.

Exemple 8

Un polymère de fluorure 4-trifluorovinyl-benzènesulfonyle est préparé par amorçage radicalaire par le peroxyde de benzoyle dans le diméthylformamide. Le polymère est précipité dans l'éther. Une solution à 12% de ce polymère dans la cyclopentanone est épandue à l'aide d'un gabarit et le solvant est séché sous air sec. Le film de polymère obtenu a une épaisseur de 24 microns. 100 $cm^2$ de cette membrane sont immergés dans un mélange de 200 mg de sel de sodium de l'hexaméthyldisilazane et 100 mg de triméthylsilanoate de sodium dans 10 ml dans d'un mélange o-xylène/diglyme (50:50 v/v). Le milieu réactionnel est maintenu à 80°C pendant 10 heures et les sous-produits de la réaction sont éliminés par lavages successifs dans le THF, le méthanol et l'eau. L'échange des ions lithium par les protons donnent un matériau dont la conductivité est supérieure à $10^{-2}$ $Scm^{-1}$ à 95% d'humidité relative.

Exemple 9

Le poly(fluorure 4-trifluorovinyl-benzènesulfonyle) de l'exemple 7 est épandu sous forme de solution sur un support de polypropylène pour former un film de 35 microns d'épaisseur, qui est ensuite découpé en une membrane de 1 mètre x 10 cm de côté. Cette membrane enroulée en spirale avec un treillis d'acier inoxydable en métal déployé permettant l'accès à toute la surface de la membrane. Cet assemblage est placé dans un réacteur de 100 ml auquel sont ajoutés 2 ml d'une solution 0.5 M d'ammoniac dans le dioxanne et 700 mg de DABCO (1,4-diazabicyclo-[2,2,2,]-octane) dans 80 ml de diméthoxyéthane. Le réacteur est fermé et maintenu à 115°C pendant 4 heures sous pression autogène. Après refroidissement et rétablissement de la pression ambiante, la membrane est séparée du milieu réactionnel et l'hydrolyse des groupements $SO_2F$ résiduels est effectuée à l'aide d'une solution de 5 g de soude dans un mélange éthanol-eau (80:20 v/v). L'échange sous forme protonique se fait dans les mêmes conditions que pour l'exemple 8.

Exemple 10

10 g d'un copolymère de tétrafluoroéthylène et de fluorure perfluorovinyloxyéthane-sulfonyle contenant 28% molaire de monomère sulfoné obtenu sous forme de latex par polymérisation en émulsion et 300 mg de nitrure de lithium en poudre de taille submicronique sont dispersés à l'aide d'un mélangeur dans 50 ml de Fluorinert FC-75® (3M, USA). La suspension est épandue à l'aide d'un gabarit sur un feuillard d'acier inoxydable de 25 microns d'épaisseur et le solvant est évaporé laissant un film de 30 microns d'épaisseur qui est ensuite recouvert par un autre feuillard d'acier inoxydable. Le polymère fluoré est réticulé par pressage à chaud à 100 $Kg.cm^{-2}$ et 150°C pendant 1 heure. La réaction de réticulation ou pontage entre les fonctions $-SO_2F$ se produit selon l'équation suivante:

$$2\ -SO_2F + Li_3N \Rightarrow 2\ LiF + -SO_2N(Li)SO_2F-$$

Après séparation des feuillards, les fonctions $SO_2F$ résiduelles sont hydrolysées par une solution aqueuse d'hydroxyde de lithium, et plusieurs lavages à l'eau permettent d'éliminer le fluorure de lithium, qui est un sous-produit de la réaction de réticulation ou d'hydrolyse des groupements $SO_2F$. Les membranes sont échangés par des protons par plusieurs immersions successives dans l'acide nitrique 2M à 60°C.

Le même procédé de réticulation peut être appliqué en remplaçant le nitrure de lithium par le carbure d'aluminium (240 mg pour 10 g) pour obtenir des ponts sulfone.

Exemple 11

Une membrane de copolymère de tétrafluoroéthylène et de fluorure perfluorovinyloxyéthane-sulfonyle similaire à celle de l'exemple 3 est immergée dans une solution 0.5 M d'ammoniaque dans le dioxanne et laissée à réagir pendant 48 heures. Les groupements -$SO_2F$ sont transformés en groupements —$SO_2NH(NH_4)$ à partir desquels la sulfonamide est obtenue par traitement par un solution d'acide chlorhydrique et rincée. Le sel de sodium est obtenu par immersion dans une solution à 10% de carbonate de sodium, suivi d'un rincage à l'eau déionisée. Le polymère est séché sous vide et 100 $cm^2$ de la membrane sont immergés dans une solution d'hexaméthydilsilazane dans l'acétonitrile et portée au reflux pendant 48 heures. Après séparation du milieu réactionnel et séchage, la membrane est placée dans un réacteur contenant 100 ml d'acétonitrile et 300 mg de fluorure de l'acide hexafluoro-propane-1,3-disulfonique $[FSO_2CF_2]_2CF_2$, et le réacteur est fermé et chauffé à 1 10°C pendant deux heures. Après refroidissement, la membrane est extraite et les groupements -$SO_2F$ restant sont hydrolysés par une solution de soude dans le mélange eau-alcool (50:50 v/v) au reflux. Les ions sodium sont échangés par les protons d'une manière similaire aux exemples précédents par l'acide nitrique 2M.

Dans une variante, les fonctions sulfonamides -$SO_2NH_2$ sont traités par un excès de dibutyl-magnésium, la membrane est rincée au THF anhydre et mise en contact à température ordinaire dans une solution de $[FSO_2CF_2]_2CF_2$. Dans les deux méthodes, les composés $[FSO_2CF_2]_2O$, $[FSO_2CF_2CF_2]_2O$, et $[ClSO_2CF_2CF_2]CF_2$ peuvent être substitués au fluorure de l'acide hexafluoro-propane-1,3-disulfonique.

Exemple 12

Une pile à combustible expérimentale est fabriquée à partir d'une membrane préparée selon l'exemple 3. Une dispersion nanométrique de platine sur support de carbone (Degussa, Allemagne) est appliquée de part et d'autre de la membrane par une technique de sérigraphie à partir d'une dispersion du carbone platiné dans une solution colloïdale (5% w/w) de Nafion 117® dans un mélange d'alcools légers (Aldrich). Le système est traité à 130°C pour assurer la cohésion des particules de Nafion®. Les collecteurs de courants sont constitués de plaques de graphite rainuré pour assurer la distribution des gaz. La pile expérimentale est testée avec une alimentation d'hydrogène et d'oxygène à pression ordinaire. La tension en circuit ouvert est de 1.2 V et la courbe courant-tension mesurée sur ce montage indique que 500 $mA/cm^2$ sont obtenus à la tension de 0.65 V. Le remplacement du platine de l'électrode négative par un alliage platine-ruthénium 50:50 permet l'utilisation comme combustible de méthanol avec une densité de courant de 150 $mA/cm^2$ à la tension de 0.6 V. La perméation du méthanol dans ces conditions est inférieure à 5 $\mu moles/cm^2 \bullet s^1$.

Exemple 13

Une pile à combustible expérimentale est fabriquée à partir d'une membrane préparée selon l'exemple 9 sous la forme de précurseurs -$SO_2F$. L'électrode de carbone platiné de l'exemple 11 est appliquée de part et d'autre de la membrane par sérigraphie d'une suspension de ce matériau dans une solution du fluorure de poly(trifluorométhylstyrène sulfonyle) dans le 1,2-dichloroéthane. La réticulation des fonctions -$SO_2F$ du système complet est, d'une manière similaire à celle de l'exemple 7, effectuée par réaction sur un mélange de dérivé sodique de l'hexaméthyldisilazane et de triméthylsilanoate de sodium dans 10 ml dans d'un mélange o-xylène/diglyme (50:50 v/v). Après réticulation, les ions $Na^+$ de la membrane et du liant des électrodes sont échangés par des protons à l'aide d'acide chlorhydrique concentré et rinçage.
La pile à combustible expérimentale utilisant cet assemblage a des performances similaires à celles obtenues pour la pile décrite dans l'exemple 12.

Exemple 14 .

L'électrolyse du chlorure de sodium est effectuée dans une cellule à deux compartiments séparés par une membrane préparée selon l'exemple 3, l'anode étant du type DSA ("dimensionnaly stable electrode") et constituée de titane recouvert d'une couche d'oxyde de ruthénium $RuO_2$, en contact avec la membrane, la cathode étant en nickel. La chute ohmique pour 2 $A/cm^2$ est de 0.4V, et la perméation des ions $OH^-$ à travers la membrane est inférieure à 8,5 $\mu moles/ cm^2 \bullet s^1$.

Exemple 15

La membrane préparée selon l'exemple 4 est utilisée pour la préparation d'ozone par électrolyse de l'eau sur une anode de dioxyde de plomb. La cathode est une grille de platine, les deux électrodes étant plaquées sur la membrane dont le coté cathodique est immergé dans l'eau. Le rendement faradique en ozone et de 20% sous 4.5V.

Exemple 16

La résine échangeuse d'ion poreuse préparée à l'exemple 5 est utilisée comme catalyseur de réaction chimique. Sous forme protonique active après déshydratation sous vide, la résine catalyse les réactions de Friedel-Craft, les estérifications, les acétalisations etc. À un mélange équimoléculaire d'anisole et d'anhydride acétique sont ajoutés 3% en poids de la résine sous forme acide. La réaction de formation de la 4-méthoxyacétophénone est complète en 45 minutes à température ordinaire.

L'échange des protons pour les ions de transition et les métaux des terres rares, en particulier $La^{+3}$ et $Y^{+3}$ donne un catalyseur pour les réactions de Friedel-Craft et de cross-aldolisation.

À un mélange équimoléculaire de cyclopentadiène et de vinyl-méthyl cétone (10 mmoles dans 30 cc de dichlorométhane) sont ajoutés 5% en poids de la résine sous forme $Y^{+3}$ séchée sous vide à 60°C. La réaction de formation du composé de condensation de Diels-Alder est complète à 25°C en 30 minutes, le rapport endo/exo étant proche de 90:10.

Dans les deux cas, le catalyseur est éliminé par simple filtration et réutilisable.

## Revendications

1. Polymère sulfoné comprenant une fraction ou la totalité des groupements sulfonyles réticulés, et dans lequel au moins une fraction des liaisons de réticulation porte une charge ionique.

2. Polymère selon la revendication 1, dans lequel les liaisons de réticulation sont du type suivant:

$$P\text{-}SO_2\text{-}Y^{-}(M^{+})\text{-}SO_2\text{-}P'$$

$$P\text{-}SO_2(M^{+})Y^{-}SO_2\text{-}(Q\text{-}SO_2)_rY^{-}(M^{+})SO_2\text{-}P'$$

   dans lesquelles

   - P et P' sont identiques ou différents et font partie d'une chaîne polymère ;
   - Y consiste en N ou CR dans lequel R représente H, CN, F, $SO_2R^3$, $C_{1-20}$ alkyle substitué ou non-substitué; $C_{1-20}$ aryle substitué ou non-substitué; $C_{1-20}$ alkylène substitué ou non-substitué, le substituant étant choisi parmi les halogènes et $SO_2R$ ;
   - $R^3$ comprend F, $C_{1-20}$ alkyle substitué ou non-substitué; $C_{1-20}$ aryle substitué ou non-substitué; $C_{1-20}$ alkylène substitué ou non-substitué, dans lesquels le substituant comprend un ou plusieurs halogènes ;
   - $M^+$ comprend un cation inorganique ou organique ;
   - Q représente un radical divalent $C_{1-20}$ alkyle, $C_{1-20}$ oxaalkyle, $C_{1-20}$ azaalkyle, $C_{1-20}$ thiaalkyle, $C_{1-20}$ aryle ou $C_{1-20}$ alkylaryle, chacun pouvant être optionnellement substitué par un ou plusieurs halogènes ; et
   - r est 0 ou 1.

3. Polymère selon la revendication 2 dans lequel $M^+$ comprend le proton, le cation d'un métal, un cation organométallique ou un cation organique optionnellement substitué par un ou plusieurs radicaux organiques R'' comprenant:

   - le proton, les radicaux alkyles, alkényles, oxaalkyles, oxaalkényles, azaalkyles, azaalkényles, thiaalkyles, thiaalkényles, dialkylazo, silaalkyles optionnellement hydrolysables, silaalkényles optionnellement hydrolysables, lesdits radicaux pouvant être linéaires, ramifiés ou cycliques et comprenant de 1 à 18 atomes de carbone ;
   - les radicaux cycliques ou hétérocycliques aliphatiques de 4 à 26 atomes de carbone comprenant optionnellement au moins une chaîne latérale comprenant un ou plusieurs hétéroatomes tels que l'azote, l'oxygène ou le soufre;
   - les aryles, arylalkyles, alkylaryles et alkénylaryles de 5 à 26 atomes de carbone comprenant optionnellement un ou plusieurs hétéroatomes dans le noyau aromatique ou dans un substituant.

4. Polymère selon la revendication 3, dans lequel le métal comprend un métal alcalin, un métal alcalino-terreux, une terre rare ou un métal de transition; le cation organométallique comprend un métallocénium, un arène-métallocénium, un alkylsilyle, un alkylgermanyle ou un alkylétain, et le cation organique comprend un groupement onium choisi parmi les groupements comprenant un oxonium, un ammonium, un amidinium, un guanidinium, un pyridinium, un imidazolium, un triazolium, un imidazolinium, un sulfonium, un phosphonium, un iodonium, un carbonium, dans lesquels les oniums comprennent au moins un radical organique R" tel que défini précédemment, et lorsqu'un cation organique comporte au moins deux radicaux R" différents de H, ces radicaux peuvent former ensemble un cycle aromatique ou non, englobant éventuellement le centre portant la charge cationique.

**5.** Polymère selon la revendication 2 dans lequel le radical divalent et le polymère sulfoné sont partiellement ou totalement fluorés.

**6.** Polymère selon la revendication 1 dérivé d'au moins un des monomères suivant:

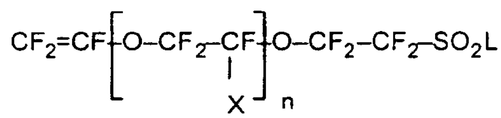

;

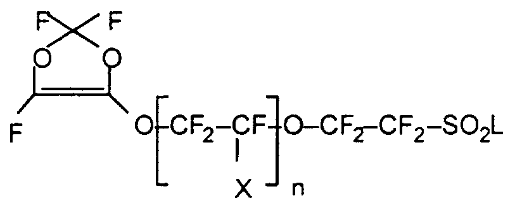

;

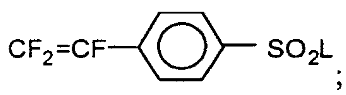

;

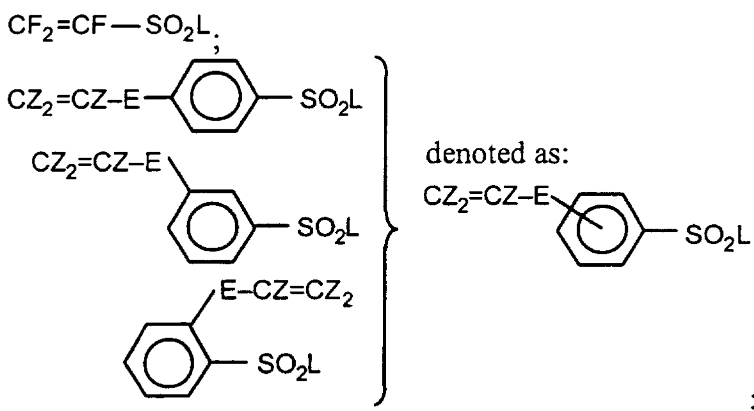

denoted as:

;

or:

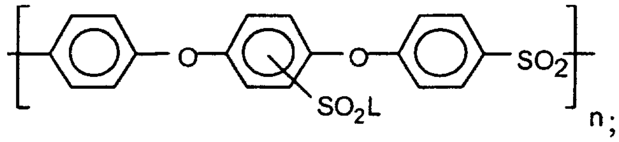

dans lesquelles

- X est F, Cl ou $CF_3$;
- n varie entre 0 et 10 inclusivement;
- E est absent, O, S, $SO_2$;
- Z est H ou F; et
- L est un groupement labile.

**7.** Polymère selon la revendication 1 comprenant en outre un agent de renforcement.

**8.** Utilisation d'un polymère réticulé selon la revendication 1 dans un procédé d'électrolyse chlore-soude, comme séparateur dans une préparation électrochimique de composés organiques et inorganiques, comme séparateur entre une phase aqueuse et une phase organique, ou comme catalyseur pour les additions Diels-Alder, les réactions Friedel-Craft, les condensations aldol, la polymérisation cationique, les estérifications, et la formation d'acétals.

**9.** Cellule électrochimique dans laquelle une membrane comprenant un polymère réticulé selon la revendication 1 est utilisée comme électrolyte solide.

**10.** Cellule selon la revendication 9 comprenant une pile à combustible, un électrolyseur à l'eau, une pile chlore-soude, une pile électrochimique à recouvrement de sels ou d'acide, ou une pile produisant de l'ozone.

**11.** Cellule selon la revendication 10 formant un élément d'une pile à combustible dans laquelle $M^+$ est un proton hydraté et l'électrode positive contient un catalyseur réducteur d'oxygène.

**Patentansprüche**

**1.** Sulfoniertes Polymer mit teilweise oder vollständig vernetzten Sulfonylgruppen, bei dem zumindest ein Teil der Vernetzungsbindungen eine ionische Ladung trägt.

**2.** Polymer nach Anspruch 1, bei dem die Vernetzungsbindungen folgender Art sind:

$$P\text{-}SO_2\text{-}Y^-(M^+)\text{-}SO_2\text{-}P'$$

$$P\text{-}SO_2(M^+)Y^-SO_2\text{-}(Q\text{-}SO_2)_rY^-(M^+)SO_2\text{-}P'$$

worin

- P und P' gleich oder verschieden sind und Teil einer Polymerkette sind;
- Y für N oder CR, worin R H, CN, F, $SO_2R^3$, gegebenenfalls substituiertes $C_{1-20}$-Alkyl, gegebenenfalls substituiertes $C_{1-20}$-Aryl oder gegebenenfalls substituiertes $C_{1-20}$-Alkylen, wobei der Substituent unter den Halogenen und $SO_2R$ ausgewählt ist, bedeutet, steht;
- $R^3$ für F, gegebenenfalls substituiertes $C_{1-20}$-Alkyl, gegebenenfalls substituiertes $C_{1-20}$-Aryl oder gegebenenfalls substituiertes $C_{1-20}$-Alkylen, worin der Substituent ein oder mehrere Halogene umfaßt, steht;
- $M^+$ für ein anorganisches oder organisches Kation steht;
- Q für einen zweiwertigen $C_{1-20}$-Alkyl-, $C_{1-20}$-Oxaalkyl-, $C_{1-20}$-Azaalkyl-, $C_{1-20}$-Thiaalkyl-, $C_{1-20}$-Aryl- oder $C_{1-20}$-Alkylarylrest, der gegebenenfalls durch ein oder mehrere Halogene substituiert sein kann, steht und

- r gleich 0 oder 1 ist.

**3.** Polymer nach Anspruch 2, bei dem $M^+$ für ein Proton, ein Kation eines Metalls, ein Organometallkation oder ein gegebenenfalls durch einen oder mehrere organische Reste R", die für

- ein Proton, Alkyl-, Alkenyl-, Oxaalkyl-, Oxaalkenyl-, Azaalkyl-, Azaalkenyl-, Thiaalkyl-, Thiaalkenyl-, Dialkylazo-, gegebenenfalls hydrolysierbare Silaalkyl- oder gegebenenfalls hydrolysierbare Silaalkenylreste, die linear, verzweigt oder cyclisch sein können und 1 bis 18 Kohlenstoffatome enthalten;
- cyclische oder heterocyclische aliphatische Reste mit 4 bis 26 Kohlenstoffatomen, die gegebenenfalls mindestens eine Seitenkette, die ein oder mehrere Heteroatome, wie Stickstoff, Sauerstoff oder Schwefel, enthält, enthalten;
- Aryl-, Aralkyl-, Alkylaryl- und Alkenylarylreste mit 5 bis 26 Kohlenstoffatomen, die gegebenenfalls im aromatischen Kern oder in einem Substituenten ein oder mehrere Heteroatome enthalten;

stehen, substituiertes organisches Kation steht.

**4.** Polymer nach Anspruch 3, bei dem es sich bei dem Metall um ein Alkalimetall, ein Erdalkalimetall, ein Seltenerdmetall oder ein Übergangsmetall handelt; bei dem Organometallkation um ein Metallocenium-, ein Arenmetallocenium-, ein Alkylsilyl-, ein Alkylgermanyl- oder ein Alkylzinnkation handelt und bei dem organischen Kation um ein Oxonium-, Ammonium-, Amidinium-, Guanidinium-, Pyridinium-, Imidazolium-, Triazolium-, Imidazolinium-, Sulfonium-, Phosphonium-, Iodonium- oder Carboniumkation handelt, worin die Onium-Kationen mindestens einen organischen Rest R" gemäß obiger Definition enthalten und für den Fall, daß ein organisches Kation mindestens zwei von H verschiedene Reste R" enthält, diese Reste miteinander einen gegebenenfalls aromatischen Ring bilden können, der gegebenenfalls das die kationische Ladung tragende Zentrum umgeben kann.

**5.** Polymer nach Anspruch 2, bei dem der zweiwertige Rest und das sulfonierte Polymer teil- oder perfluoriert sind.

**6.** Polymer nach Anspruch 1, abgeleitet von mindestens einem der folgenden Monomere:

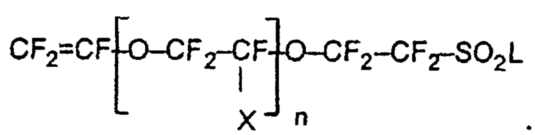

;

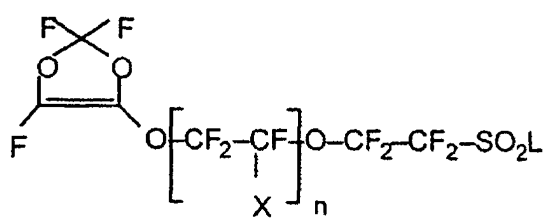

;

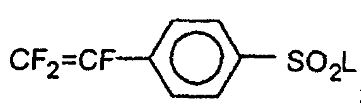

;

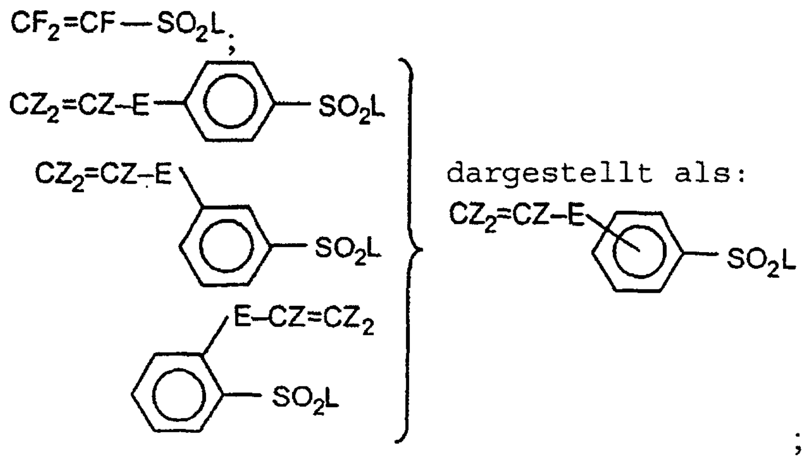

dargestellt als:

;

oder

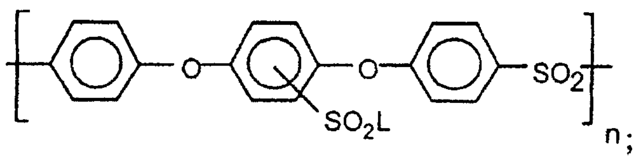

worin

- X für ein F, Cl oder $CF_3$ steht;
- n einen Wert zwischen 0 und 10 inklusive hat;
- E fehlt oder für O, S oder $SO_2$ steht;
- Z für F oder H steht; und
- L für eine labile Gruppe steht.

**7.** Polymer nach Anspruch 1, das ferner ein Verstärkungsmittel enthält.

**8.** Verwendung eines vernetzten Polymers nach Anspruch 1 bei einem Chloralkali-Elektrolyseverfahren, als Separator bei der elektrochemischen Herstellung von organischen und anorganischen Verbindungen, als Separator zwischen einer wäßrigen Phase und einer organischen Phase oder als Katalysator für Diels-Alder-Additionen, Friedel-Crafts-Reaktionen, Aldolkondensationen, kationische Polymerisationen, Veresterungen und die Bildung von Acetalen.

**9.** Elektrochemische Zelle, bei der eine ein vernetztes Polymer nach Anspruch 1 enthaltende Membran als Festelektrolyt verwendet wird.

**10.** Zelle nach Anspruch 9, bei der es sich um eine Brennstoffzelle, eine Wasserelektrolysezelle, eine Chloralkali-Zelle, eine elektrochemische Zelle zur Rückgewinnung von Salzen oder Säure oder eine Ozon produzierende Zelle handelt.

**11.** Zelle nach Anspruch 10, die ein Element einer Brennstoffzelle bildet, bei der $M^+$ für ein hydratisiertes Proton steht und die positive Elektrode einen Sauerstoffreduktionskatalysator enthält.

**Claims**

**1.** Sulphonated polymer comprising a fraction or all of the sulphonyl groups crosslinked and in which at least a fraction of the crosslinking bonds carries an ionic charge.

**2.** Polymer according to Claim 1, in which the crosslinking bonds are of the following type:

$$P\text{-}SO_2\text{-}Y^-(M^+)\text{-}SO_2\text{-}P'$$

$$P\text{-}SO_2(M^+)Y^-SO_2\text{-}(Q\text{-}SO_2)_rY^-(M^+)SO_2\text{-}P'$$

in which

- P and P' are identical or different and form part of a polymer chain;
- Y consists of N or CR in which R represents H, CN, F, $SO_2R^3$, substituted or unsubstituted $C_{1-20}$ alkyl, substituted or unsubstituted $C_{1-20}$ aryl or substituted or unsubstituted $C_{1-20}$ alkylene, the substituent being chosen from halogens and $SO_2R$;
- $R^3$ comprises F, substituted or unsubstituted $C_{1-20}$ alkyl, substituted or unsubstituted $C_{1-20}$ aryl or substituted or unsubstituted $C_{1-20}$ alkylene, in which the substituent comprises one or more halogens;
- $M^+$ comprises an inorganic or organic cation;
- Q represents a divalent $C_{1-20}$ alkylene, $C_{1-20}$ oxaalkylene, $C_{1-20}$ azaalkylene, $C_{1-20}$ thioalkylene, $C_{1-20}$ arylene or $C_{1-20}$ alkylarylene radical, it being possible for each to be optionally substituted by one or more halogens; and
- r is 0 or 1.

**3.** Polymer according to Claim 2, in which $M^+$ comprises a proton, the cation of a metal, an organometallic cation or an organic cation optionally substituted by one or more organic radicals R" comprising:

- a proton or alkyl, alkenyl, oxaalkyl, oxaalkenyl, azaalkyl, azaalkenyl, thiaalkyl, thiaalkenyl, dialkylazo, optionally hydrolysable silaalkyl or optionally hydrolysable silaalkenyl radicals, the said radicals being able to be linear, branched or cyclic and comprising from 1 to 18 carbon atoms;
- aliphatic cyclic or heterocyclic radicals of 4 to 26 carbon atoms optionally comprising at least one side chain comprising one or more heteroatoms, such as nitrogen, oxygen or sulphur;
- aryl, arylalkyl, alkylaryl and alkenylaryl radicals of 5 to 26 carbon atoms optionally comprising one or more heteroatoms in the aromatic nucleus or in a substituent.

**4.** Polymer according to Claim 3, in which the metal comprises an alkali metal, an alkaline earth metal, a rare earth metal or a transition metal, the organometallic cation comprises a metallocenium, an arenemetallocenium, an alkylsilyl, an alkylgermanyl or an alkyltin, and the organic cation comprises an onium group chosen from the groups comprising an oxonium, an ammonium, an amidinium, a guanidinium, a pyridinium, a imidazolium, a triazolium, an imidazolinium, a sulphonium, a phosphonium, an iodonium or a carbonium, in which the oniums comprise at least one organic radial R" as defined above, and, when an organic cation comprises at least two R" radicals other than H, these radicals can together form an aromatic or nonaromatic ring optionally encompassing the centre carrying the cationic charge.

**5.** Polymer according to Claim 2, in which the divalent radical and the sulphonated polymer are partially or completely fluorinated.

**6.** Polymer according to Claim 1, derived from at least one of the following monomers:

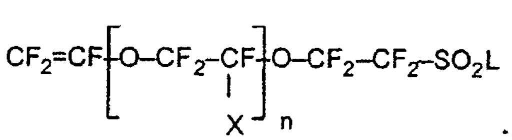

;

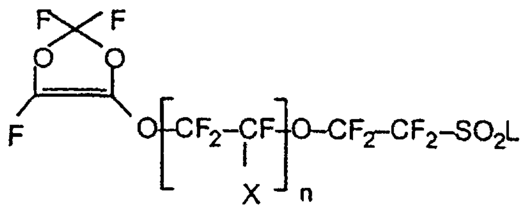

;

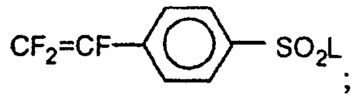

;

$CF_2{=}CF{-}SO_2L$;

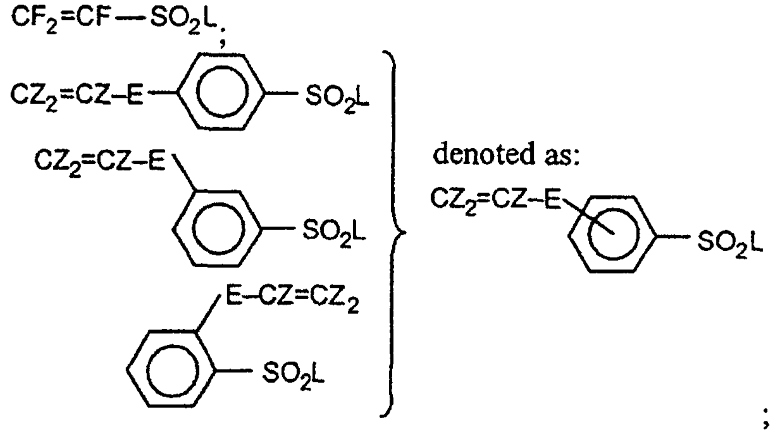

denoted as:

;

or

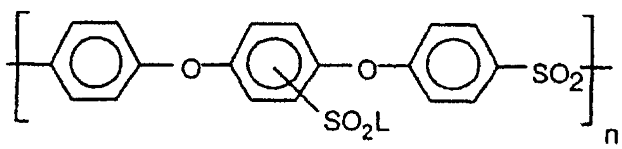

;

in which

- X is F, Cl or $CF_3$;
- n varies between 0 and 10 inclusive;
- E is absent, O, S or $SO_2$;
- Z is H or F; and
- L is a labile group.

**7.** Polymer according to Claim 1, additionally comprising a reinforcing agent.

**8.** Use of a crosslinked polymer according to Claim 1 in a chlorine-sodium hydroxide electrolysis process, as separator in an electrochemical preparation of organic and inorganic compounds, as separator between an aqueous phase and an organic phase, or as catalyst for Diels-Alder additions, Friedel-Craft reactions, aldol condensations, cationic

polymerization, esterifications and the formation of acetals.

**9.** Electrochemical cell, in which a membrane comprising a crosslinked polymer according to Claim 1 is used as solid electrolyte.

**10.** Cell according to Claim 9, comprising a fuel cell, a water electrolyser, a chlorine-sodium hydroxide cell, an electrochemical cell with recovery of salts or of acid, or an ozone-producing cell.

**11.** Cell according to Claim 10, forming a component of a fuel cell in which $M^+$ is a hydrated proton and the positive electrode comprises an oxygen-reducing catalyst.